# EUROPEAN PATENT SPECIFICATION

(11) **EP 4 556 961 B1**
(45) Date of publication and mention of the grant of the patent: **15.10.2025**
(21) Application number: 23210680.7
(22) Date of filing: 17.11.2023
(51) Int. Cl.: G01T 1/17

(54) **DIGITAL PULSE PROCESSING FOR SPECTROMETRY**
DIGITALE IMPULSVERARBEITUNG FÜR SPEKTROMETRIE
TRAITEMENT D'IMPULSIONS NUMÉRIQUES POUR SPECTROMÉTRIE

(43) Date of publication of application: 21.05.2025
(73) Proprietor: Bruker Nano GmbH, 12489 Berlin (DE)
(72) Inventor: Bombelli, Luca, 20158 Milano (IT)
(74) Representative: Gulde & Partner

(56) References cited:
- WO-A1-2023/067460
- WO-A1-2023/166592
- US-A1- 2023 152 251
- GONG KUANG ET AL: "Machine Learning in PET: From Photon Detection to Quantitative Image Reconstruction", PROCEEDINGS OF THE IEEE, IEEE. NEW YORK, US, vol. 108, no. 1, 1 January 2020 (2020-01-01), pages 51 - 68, XP011763164, ISSN: 0018-9219, [retrieved on 20191227], DOI: 10.1109/JPROC.2019.2936809

## Description

### Field of the Invention

The invention pertains to the field of performing digital pulse processing for spectrometry using neural networks.

### Technological Background

Spectrometry is a widely adopted analytical technique used to determine the properties and composition of materials by radiating photons on samples of the analyzed materials and detecting and analyzing the photons emitted, absorbed, or scattered therefrom. Various types of spectrometers have been developed, including optical spectrometers, mass spectrometers, and X-ray spectrometers, each catering to specific applications.

In spectrometric systems, detectors convert the incident photon radiation into analog electrical signals, which are representative of the sample's properties. These analog signals are then processed and commonly converted to digital signals for further processing.

The processing of the signals in their digital form is referred to as digital pulse processing, which is performed by components called digital pulse processors in the spectrometers. Digital Pulse Processors (DPPs) provide precise, flexible, and rapid signal processing. By converting analog detector outputs into digital signals and processing them with the DPP, a spectrometer can provide information related to the properties of the detected photons, particularly the energy of the photon, the time or detection, and the like, from which the elemental and molecular composition, concentration, physical properties, and/or spatial distribution of materials could be analyzed.

While Digital Pulse Processing provides benefits in terms of latency of analysis, noise robustness, and versatility, the deployed algorithms are complex, requiring elaborate research and development as well as expensive hardware to operate. In similar regards, publication US2023152251A1 relates to signal processing methods for detecting and counting radiation by analyzing step waves, publication GONG KUANG ET AL;

Reference: "Machine Learning in PET: From Photon Detection to Quantitative Image Reconstruction", PROCEEDINGS OF THE IEEE, IEEE. NEW YORK, US, vol. 108, no. 1, 1 January 2020 (2020-01-01), pages 51-68 relates to the application of machine learning in PET imaging from photon detection to quantitative image reconstruction, publication WO2023067460A1 relates to a method and device for acquiring gamma photons using a system that integrates multiple neural networks to reconstruct the position and timing of gamma photon interactions in a detector, and publication WO2023166592A1 relates to a learning device and neutron measurement device designed to reduce erroneous detections in neutron measurement systems, particularly those caused by the pile-up phenomenon in pulse signals.

There is thus a need in the art for spectrometers and digital pulse processors for spectrometers that provide accurate and fast analysis of the signal from the detector while reducing the complexity of development and hardware required to execute the analysis.

### Description of Invention

According to an aspect of the present disclosure, there is provided a method for a digital pulse processor of a spectrometer, corresponding to independent claim 1. The method includes the steps of obtaining a signal from a radiation detector configured to detect one or more photons, processing the signal using at least two neural networks, and providing information indicative of properties of detected one or more photons based on the processing.

According to some embodiments, processing the signal includes one or more of the following DPP processing functions: baseline determination and restoration, pulse shaping, pulse height analysis, pulse timing and time stamp assignment, pulse rate determination, pulse discrimination, signal pile-up detection, signal pile-up correction, digital gating, and filtering of the signal.

According to some embodiments, at least one neural network is trained and configured to perform a subset of the DPP processing functions. According to some embodiments, at least one neural network is trained and configured to perform all the DPP functionalities.

According to some embodiments, multiple neural networks are used, are being trained, and are configured to perform different DPP processing functions, forming specialized neural networks.

Advantageously, training and configuring at least one neural network for performing one or more DPP functionalities increases the accuracy of the of the processing while simplifying the hardware requirements for performing the processing.

According to some embodiments, the at least two neural networks comprise a Feedforward Neural Network, suited for straightforward signal pattern analysis, offering a linear progression through layers. Advantageously, the feedforward neural network provides efficient processing for simple pattern recognition, offering a balance between computational demand and performance.

According to some embodiments, the at least two neural networks comprise a Deep Neural Network (DNN) including a multi-layered architecture with several hidden layers between the input and output layers, each layer including interconnected nodes or neurons. Advantageously, the DNN, due to its depth, can model highly complex, non-linear relationships within the signal, which is especially effective at feature extraction, with each successive layer capturing increasingly abstract and intricate features from the input data.

According to some embodiments, the at least two neural networks comprise a Convolutional Neural Network (CNN), Tailored for spatial hierarchies within the signal. Each convolutional layer detects patterns, making them apt for intricate signal structures.

According to some embodiments, the at least two neural networks comprise a Recurrent Neural Network (RNN) designed for data with temporal sequences, which is especially beneficial for signals with time-based patterns.

Commonly, the signal obtained from the detector is an analog signal, which is more susceptible to noise and could be partially processed using analog circuitry, which provides limited processing capabilities.

According to some embodiments, the method further includes converting the obtained signal from the radiation detector from an analog signal to a digital signal prior to the processing of the signal. Advantageously, converting the signal from an analog signal to a digital signal reduces the noise susceptibility of the signal and facilitates digital processing thereof.

According to some embodiments, the method includes performing amplification to the analog signal prior to the analog-to-digital conversion (ADC), thereby enhancing the signal-to-noise ratio for improved data acquisition.

According to some embodiments, the signal obtained from the detector signal is amplified with gain in the order of 0.5 to 10 uV/el (10 microvolt/photogenerated electron). According to some embodiments, an amplitude range of the signal at the input of the ADC is in the range of 1 to 20 eV/LSB. Advantageously, an amplification of the signal in this range results in a quantization noise introduced by the ADC that is sufficiently lower than the signal noise before the conversion.

According to some embodiments, the method further includes performing frequency filtration to the signal prior to the analog to digital conversion, for attenuating frequencies that could negatively impact the analysis of the signal and for reducing the noise ratio therein. According to some embodiments, the method includes performing low-pass filtration to the analog signal. According to some embodiments, the method includes performing high-pass filtration to the signal. According to some embodiments, the method includes performing band-pass filtration to the signal.

According to some embodiment a finite response filter is utilized for filtering the signal. According to some embodiments, an infinite response filter is utilized for filtering the signal. According to some embodiments, a neural network, such as a deep neural network, is used for filtering the signal.

According to some embodiments, the signals obtained from the radiation detector, and subsequent amplification stages of the signal, have a frequency bandwidth ranging from 0 to 10 MHz or up to 50MHz. Accordingly, in some embodiments, the analog-to-digital conversion utilizes sampling of the signal with a frequency in the range of 40 and 150 MHz. According to some embodiments, in order to increase the signal-to-noise ratio, the implemented digital filter has a frequency bandwidth ranging from 1 to 100kHz depending on: the detector type, the amplification stages and input rate of incoming radiation.

According to some embodiments, the at least two neural networks are configured to analyze the signal for deriving information indicative of properties of the detected photons, which include one or more of the energy of the photon, the time of arrival of the photon, a signal rise time of the detection of the photon, and a pile-up condition of the detection.

As used herein, the term pile-up condition refers to a situation in which more than one photon is encountered by the detector in close temporal proximity.

Upon the absorption of a photon, the detector generates an electronic pulse. The height or amplitude of this pulse, under typical conditions, is directly related to the energy of the incoming photon. The pile-up condition or phenomenon arises when the system detects multiple photon events within a time frame shorter than a pulse duration generated by the detector in response to individual photon interactions, or shorter than the defined temporal duration of the adopted filter. If two photons arrive at the detector with a temporal distance lower than the temporal duration of the filter, such filter may not measure the energies of the photons independently, as desired, but it provides an unknow combination the two photon energies.

During pile-up conditions, the system receives multiple photons simultaneously or within a short time span, resulting in an overlap of the generated pulses, which produces a composite pulse. Since the spectrometry relies on pulse amplitude to determine the energy of the detected photon, the composite pulse resulting from the pile-up condition limits the ability to derive information on each of the detected photons, particularly in relation to the energy of the photons, and the time of impact.

Advantageously, the at least two neural networks are configured to obtain the signal from the detector and identify a pile-up condition based thereon. According to some embodiments, the method further includes deciding whether or not to analyze the signal, or a section thereof, based on whether a pile-up condition is detected in the signal or the section.

According to the invention, a discrepancy detection neural network is utilized for obtaining one or more sections of the signal to determine whether the signal or the one or more sections need to be further processed or discarded.

As used herein, the term section refers to an interval selected within the signal between two time points thereof. According to some embodiments, the signal is segmented into a plurality of segments or intervals which are independently analyzed. According to some embodiments, the method includes performing a preliminary segmentation. The preliminary segmentation of the signal can be based on a predetermined rule, such as every predetermined number of samples, every predetermined time period, or the like.

According to some embodiments, the preliminary segments are analyzed for detecting photons and providing information indicative of properties of detected one or more photons within the preliminary segments.

According to the invention, a segment is provided as an input to the neural network, wherein each of the samples within the segment is an input to the neural network.

According to some embodiment one of the one or more neural networks is trained and configured to detect a pile-up condition within a segment. According to some embodiment one of the one or more neural networks is trained and configured to identify a rise time of an event within a segment. According to some embodiment one of the one or more neural networks is trained and configured to estimate an energy of an incoming photon within a segment. According to some embodiment one of the one or more neural networks is trained and configured to detect a pile-up condition, identify a rise time of an event, and estimate an energy of an incoming photon within a segment.

According to the invention, the method further includes providing a discrepancy detection neural network as one of the at least one neural network, wherein the processing of the signal includes: providing at least one section of the signal to the discrepancy detection neural network, obtaining, from the discrepancy detection neural network and for each section of the at least one section, information on a photon detection event in the section, and processing, based on the information on a photon detection event, the at least one section.

According to some embodiments, the length of the signal segment is specifically tailored according to specific conditions. According to some embodiments, the signal segments are significantly longer than the detector response to individual photon interactions, for example, 10% longer, 50%, longer, 100% longer, or more. According to some embodiments, a signal segment is as long as or longer than the cycle duration of a low frequency noise that is intended to be filtered. Advantageously, maintaining a shorter segment length reduces the complexity of the neural network, since very long signal segments do not add significant information into the neural network but increase the network complexity and training time, leading to sub-optimal results. According to some embodiments, if a detector response to individual photon last for 10 to 100ns, a desired signal segment length is in the order of 200ns to 20us. Considering a sampling frequency of 100Mhz, a corresponding signal segment can be composed of 20 to 2000 samples.

According to some embodiments, the signal segment is selected to include all the region of interest of the signal. In some embodiments, all the input signal needs to be processed and therefore the segmentation can occur with a periodic time-interval equal to or smaller than the segment length in order to potentially have 100% coverage on the signal. According to some embodiments, the processing of a section includes discarding a section of the at least one section for which the information on a photon detection event indicates that a photon detection event did not occur.

Advantageously, segments in which no photon detection events are identified are discarded, thereby avoiding analysis of segments in which no information exists on impacted photons and reducing the computational workload of the digital pulse processing, particularly further neural networks if applicable.

According to some embodiments, a specialized idle-detection neural model is trained and configured to obtain segments of the signal and classify whether the obtained signal is idle or includes photon impacts. According to some embodiments, such neural networks is trained and configured to be more sensitive to the narrow pulses of the interacting photon than to the random noise fluctuation of the signal. In one implementation, the neural model is sensible to the amplitude of the signal, and compares it to a threshold which is configured above the random fluctuation of the noise. If the signal, at any time, overcomes or surpasses the threshold, this indicates that at least one photon has arrived or impacted the detector. According to some embodiments, the neural network model is trained and configured to identify the characteristic shape of the photon pulse. Advantageously, this leads to a better probability of a correct output for very-low photon amplitude which could alternatively be confused with the noise.

According to the invention, the processing of the at least one section includes: processing each section for which the information on a photon detection event indicates that a photon detection event did occur, preferably via at least one other neural network of the at least two neural networks in order to obtain information indicative of properties of detected one or more photons.

According to some embodiments, the preliminary segments are analyzed and a modified segmentation of the signal is performed based on the analysis of the preliminary segments. According to some embodiments, the modified segments are analyzed for detecting photons and providing information indicative of properties of detected one or more photons within the preliminary segments.

According to some embodiments, a modified section of the signal is determined for each photon detection event, such that the modified section includes a predetermined number of samples of the signal that occurred before the event and a predetermined number of samples of the signal that occurred after the event.

Advantageously, the modified segments provide a more normalized set of segments for further processing, wherein the lengths of the different modified segments are equal or within a predetermined range, and wherein the even within each of the modified segments is fully captured within each of the modified segments.

The modified segmentation results in cleaner input data to the one or more neural networks for further processing. Particularly, the one or more neural networks for further processing are trained based on segments similar in length and properties, such as the position of an event within a segment, to the modified segments, thereby resulting in increased processing accuracy and allowing simpler neural networks to be utilized for the processing.

According to some embodiments, the at least one other neural network is configured to provide pile-up information on a photon detection event in the section or the modified section that identifies whether the section or the modified section comprises a single photon detection event or a pile-up photon detection event in which a plurality of photons are detected.

Advantageously, detecting a pile-up condition in a segment can result in preventing further processing of the segment with the pile-up condition, leading to a more efficient use and utilization of the processing modules and one or more neural networks in the digital pulse processor.

According to some embodiments the at least one other neural network of the at least one neural network is configured to identify a signal rise time within a section of the at least one section for which the information on a photon detection event indicates that a photon detection event did occur or within a modified section.

The rise time of a signal denotes the duration it takes for a signal to transition from a lower value or base value to its maximum amplitude. Detecting the rise time plays an important role in characterizing the properties of the detected photon. Particularly, the rise time of the detected pulses can provide valuable information about the type and energy of the incident radiation. Different radiation types or energies can result in characteristic rise times, enabling discrimination between them and enhancing the precision of the detection system.

According to some embodiments, the modified segmentation is performed based on the onset of the rise of the signal.

According to some embodiments, a signal or segment with a long rise time is indicative of a low-energy event, which results in a low signal-to-noise ratio, thereby impeding the accuracy of the analysis and processing. Additionally, longer rise times can result in blurring the temporal resolution of an event, which impedes the ability to establish when an event started within the segment or the signal.

According to some embodiments, processing the signal further includes discarding sections for which a signal rise time exceeds a predefined threshold. According to some embodiments, processing the signal further includes determining an energy correction for a photon detection event based on the signal rise time.

Commonly, a longer rise time results in a lower peak value of the event. According to some embodiments, the analysis of events with lower rise times is corrected by adding a multiplier or modifier to the determined energy of the event, wherein the multiplier or modifier is inversely correlated to the rise time.

According to some embodiments, a neural network is trained and configured to obtain a segment of the signal, identify a rise time of an event within the segment, and provide a correction factor required for correcting the energy estimation corresponding to the rise time of the event.

According to some embodiments, the at least one neural network includes an energy detection neural network, wherein the processing of the signal includes: providing at least one section or modified section of the signal to the energy detection neural network, obtaining, from the energy detection neural network and for a section of the at least one section or a modified section, information on an energy of the detected one or more photons within the section or within the modified section.

According to some embodiments, the energy detection neural network obtains as an input a segment or a modified segment including an event with a predetermined number of samples before the event and a predetermined number of samples after the event. According to some embodiments, the energy detection neural network also obtains a correction factor identified based on the rise time of an event, optionally provided from another neural network.

According to some embodiments, the energy detection neural network is trained using one or more of the following training sets: a signal obtained from a real photo-detector system configured with a low count rate, a simulated signal with varying rise time and noise levels and characteristics, or a combination or a superposition of a signal from a real photo-detector system with a simulated signal.

According to some embodiments, the segments provided to different neural networks have different durations are segmentation conditions, based on the type and/or capability of the respective neural network.

According to some embodiments, processing of the signal includes: providing each section or modified section for which the information on a photon detection event indicates that a photon detection event did occur to the energy detection neural network, obtaining, from the energy detection neural network and for the each section for which the information on a photon detection event indicates that a photon detection event did occur, the information on an energy of the detected one or more photon in each photon detection event, providing each section for which the information on a photon detection event indicates that a photon detection event did occur to the at least one other neural network, obtaining, from the at least one other neural network and for the each section for which the information on a photon detection event indicates that a photon detection event did occur, pile-up information and/or a rise-time for the photon detection event, and modifying the information on an energy of the detected one or more photon in each photon detection event based on the pile-up information and/or the rise time for the photon detection event.

According to some embodiments, a neural network from the at least one neural network is trained using at least one of the training signals obtained from a real photo-detector system configured to have a low-count rate of photon radiation such that the photon events are single-photon events, a training signal obtained from a real photo-detector system configured to have a high-count rate of photon radiation such that the pile-up photon events are identified, a simulated training signal wherein different photon events have different rise-time, a training signal combined from a simulated training signal and a training signal obtained from a real photo-detector system.

According to some embodiments, one or more of the neural networks, in isolation or within the digital pulse processor, are trained with a low-count rate system. This approach involves using training signals obtained from real photo-detector systems that are specifically configured to have a low-count rate of photon radiation. Such systems ensure that the photon events captured are predominantly single-photon events.

Advantageously, training with single-photon events allows the neural network to develop a clear classification and training of the characteristic signature of individual photon interactions.

According to some embodiments, one or more of the neural networks, in isolation or within the digital pulse processor, are trained with a high-count rate system. This methodology involves training the neural network using signals from systems with a high-count rate of photon radiation. In such environments, pile-up photon events, where multiple photon signals overlap, are common.

Advantageously, the training method equips the neural network to recognize and handle pile-up scenarios, extracting individual photon signatures even from overlapping signals. It's a crucial capability for real-world applications where photon flux might be intense.

According to some embodiments, one or more of the neural networks, in isolation or within the digital pulse processor, are trained with simulated signals. Alternatively, or in addition to real-world signals, the neural network can also be trained using simulated training signals. Such simulations can be designed to generate photon events with varying rise times, adding diversity to the training dataset.

Advantageously, simulated data allows for controlled variability, ensuring the neural network is exposed to a wide range of photon signal scenarios. This broad training base enhances the network's adaptability and precision.

According to some embodiments, computational simulation might generate photon signals mimicking different types of radiation, each with its unique rise time. The neural network, training based on these varied signals, becomes adept at identifying different radiation types based on rise time alone.

According to some embodiments, one or more of the neural networks, in isolation or within the digital pulse processor, are trained with a hybrid system. According to some embodiments, the training dataset is a combination of both simulated signals and real-world signals from photo-detector systems. Such a hybrid approach ensures the neural network benefits from the controlled variability of simulations while still being grounded in the practical realities and nuances of actual photon detection scenarios.

Advantageously, combining the controlled, varied signals from simulations with the unpredictable, real-world signals from an operational photo-detector ensures a well-rounded training regimen for the neural network, which mitigates the risk of overfitting and increases the variety of training data sets.

According to some embodiments, the neural networks, either independently or as a part of the digital pulse processor, undergo supervised training. This entails feeding the network with labeled or tagged photon signals, where each signal or event is associated with specific annotations or characteristics. Such labeled data serves as the foundation, enabling the neural network to understand and map the relationship between input photon signals and their corresponding annotations.

Advantageously, supervised training, backed by accurate labels, yields a neural network model with high predictive accuracy. Given a new, unseen photon signal, the trained network can predict or classify the type, energy, or other characteristics of the photon event. Moreover, in scenarios where the labeled data is comprehensive and diverse, the model is likely to showcase robust performance even in varied and challenging real-world conditions.

According to some embodiments, the neural networks might be subjected to unsupervised training, especially when labeled data is scarce. **In** this setup, the neural network is exposed to unlabeled photon signals, with the aim to discern inherent patterns, groupings, or structures within the data, without any prior annotations as a guide. Techniques such as clustering or dimensionality reduction might be employed to train for such hidden structures.

Advantageously, unsupervised training allows the neural network to discover unknown or unexpected patterns within the photon signals.

According to some embodiments, a semi-supervised training approach is adopted for the neural networks. This semi-supervised training approach combines both labeled and unlabeled photon signals with the objective of harnessing large amounts of unlabeled data to complement and enhance the learning derived from limited sets of labeled data. This blended approach ensures that the neural network is not overly reliant on just the labeled samples and can generalize better to unseen scenarios.

Advantageously, semi-supervised training offers a balanced learning pathway. While the labeled data provides clear learning targets and benchmarks, the unlabeled data introduces variability and challenges, ensuring the neural network remains adaptable.

According to some embodiments, the neural networks, either when operating independently or within the digital pulse processor, are trained using continuous signals. Instead of breaking down the signals into smaller chunks or segments, the entire continuous waveform is fed into the network. This approach ensures that the neural network is exposed to the entire signal, encompassing all its intricacies, temporal dynamics, and potential long-term patterns.

Advantageously, training with continuous signals allows the neural network to capture and train on long-term dependencies within the signal.

According to some embodiments, the neural networks are trained using a segmented training approach. In this approach, the signal is segmented, and each segment is treated as an individual data point for training. This segmentation can be done based on time intervals, specific event occurrences, or the like. The segmented approach allows for focused analysis, with each segment offering a snapshot of the photon interactions within that window.

Advantageously, training with segmented signals enhances the granularity of the neural network's learning. By focusing on smaller sections or intervals of the signal, the training leads to higher-resolution insights. This approach is especially beneficial in high-throughput detection, where events occur rapidly, and there's a need to analyze each event accurately and rapidly. Additionally, segmented training is computationally efficient, as each segment can be processed independently, allowing for parallel processing or distributed learning.

According to some embodiment, the unsegmented signal is analyzed for detecting possible/potential events and the timing of the potential events is determined. According to some embodiments, the segmentation is performed based on the detected timing of the potential events. According to some embodiments, the segments are extracted by obtaining a predetermined number of samples prior to the detected timing of a potential event and a predetermined number of samples thereafter. According to some embodiments, two segments can overlap, meaning that one or more samples can be included in two adjacent segments.

According to some embodiments, the signal is pre-processed to establish a baseline or pedestal, before being segmented. According to some embodiments, after the segmentation or after the modified segmentation, the segments are pre-processed to establish a baseline or a pedestal.

The baseline refers to the underlying level or background value of a signal when there is no active event or pulse present. The baseline can refer to the "resting" or "idle" value of the signal, against which deviations, like pulses or peaks, are measured. Importantly, the baseline serves as a reference for detecting and measuring pulses. The amplitude of a pulse, for instance, is determined relative to the baseline, and fluctuations around the baseline can give insights into the noise levels in the signal. A stable baseline indicates low noise, while a fluctuating one suggests higher noise levels. A baseline can be a drifting baseline or an unstable baseline, introducing errors to the processing of the signal. Accordingly, in some embodiments, the baseline of the signal is periodically or continuously evaluated, for example, by eliminating events and applying a low pass filter, or by implementing a moving average.

The pedestal is used herein to refer to an artificially introduced or predetermined reference level against which the signal is measured. Advantageously, by setting a pedestal, the measured pulse amplitude represent at best the energy of the detected photon while mitigating systematic contribution added by the detector or by the amplifying electronics.

Advantageously, establishing the baseline and/or pedestal of the signal normalizes the input data to the one or more neural networks, thereby improving the accuracy of their processing.

According to some embodiments, the baseline or pedestal is measured using a different strategy in the section of the signal with no active event than in a section of the signal with a pulse present. In one embodiment, the signal section can be averaged or fit with a linear regression. According to some embodiments, the resulting average values are further provided to a low-pass filter in order to reduce the bandwidth on the baseline measurement and further improve the baseline-to-noise ratio.

According to some embodiments, the output value of the signal filter that measure the pulse amplitude can be used as baseline measurement. When no pulse is present, the output value of such filter, fluctuates around the baseline value due to the noise. Therefore, a low pass filter can be used to extract the baseline value and further improve the baseline-to-noise ratio. As elaborated above, according to some embodiments, the signal filter is a finite response filter, an infinite response filter, or a neural network.

According to the invention, there is provided a digital pulse processor for a spectrometer, configured to operate corresponding to one or more of the methods brought above, corresponding to the appended claims.

According to the invention, there is provided a spectrometer, including a radiator, configured to emit photonic radiation across a specified wavelength range, a detector, configured to detect one or more photons and generate a signal corresponding to detecting one or more photons, and a digital pulse processor as brought above, corresponding to the appended claims.

According to some embodiments, the radiator is an X-ray radiator comprising an X-ray tube or a radioactive X-ray source.

The neural networks elaborated above receive as an input a signal or segments thereof. According to some embodiments, one or more of the neural networks receives as an input, in addition to the signal or instead of the signal, a result of a processing of the signal. According to some embodiment, one or more of the neural networks is provided with a frequency domain transformation of the signal or the section, for example obtained through fast furrier transform. According to some embodiment, one or more of the neural networks obtains a filtered signal or section thereof. According to some embodiments, one or more of the neural networks obtains a derivation of the signal or a section thereof from the first order, second order, or a higher order.

According to some embodiments, one or more of the neural networks is implemented through dedicated hardware, particularly, Field-Programmable Gate Arrays (FPGAs) or Digital Signal Processors (DSPs). FPGAs are programmable, allowing for the custom configuration of their logic gates to match the specific requirements of the neural network. Advantageously, this reconfigurability of the FPGA allows adjusting the parameters and hyperparameters of a neural network, for example based on further training of the neural network. According to some embodiments, an FPGA is configured to provide parallel processing capabilities, enabling simultaneous computations for the matrix operations of neural network calculations. DSP processors, specifically designed for high-speed processing tasks, are well-suited for the computational demands of neural networks.

Certain embodiments of the present disclosure may include some, all, or none of the above advantages. One or more technical advantages may be readily apparent to those skilled in the art from the figures, descriptions, and claims included herein. Moreover, while specific advantages have been enumerated above, various embodiments may include all, some, or none of the enumerated advantages.

In addition to the exemplary aspects and embodiments described above, further aspects and embodiments will become apparent by reference to the figures and by study of the following detailed descriptions.

### Brief Description of the Drawings

Examples illustrative of embodiments are described below with reference to figures attached hereto. In the figures, identical structures, elements, or parts that appear in more than one figure are generally labeled with the same numeral in all the figures in which they appear. Alternatively, elements or parts that appear in more than one figure may be labeled with different numerals in the different figures in which they appear. Dimensions of components and features shown in the figures are generally chosen for convenience and clarity of presentation and are not necessarily shown in scale. The figures are listed below.
Fig. 1 schematically illustrates a spectrometer, according to some embodiments;
Fig. 2 schematically illustrates a digital pulse processor of a spectrometer, according to some embodiments;
Fig. 3 schematically illustrates a high-level method of a digital pulse processor for a spectrometer, according to some embodiments;
Fig. 4 schematically illustrates a method of a digital pulse processor for a spectrometer, according to some embodiments; and
Fig. 5 schematically illustrates an exemplary analysis of a signal from a detector, according to some embodiments.

### Detailed Description of the Drawings

In the following description, various aspects of the disclosure will be described. For the purpose of explanation, specific configurations, and details are set forth in order to provide a thorough understanding of the different aspects of the disclosure. However, it will also be apparent to one skilled in the art that the disclosure may be practiced without specific details being presented herein. Furthermore, well-known features may be omitted or simplified in order not to obscure the disclosure.

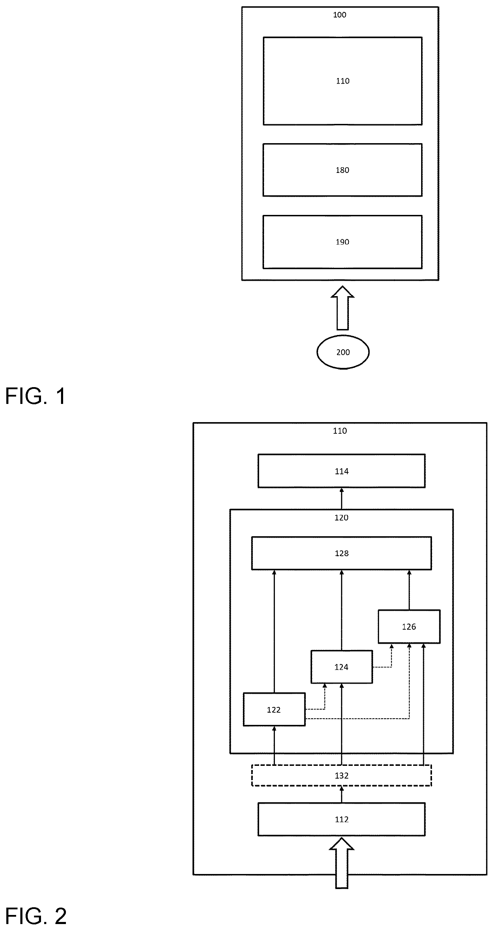

Reference is now made to Fig. 1, which schematically illustrates a spectrometer 100, according to some embodiments. The spectrometer includes a detector 190 configured to receive photon radiation from a sample 200, an amplifier 180, and a digital pulse processor 110.

As depicted in Fig. 1, the sample 200, which can be a material or substance of interest, emits photon radiation when subjected to specific external stimuli or conditions, such as radiation from an X-ray radiator. This emitted radiation carries information about the sample's properties, composition, or structure. The detector 190, positioned in proximity to the sample 200, is designed to capture this emitted photon radiation. The detector 190 is configured to detect a particular range of photon energies, ensuring optimal sensitivity and specificity, for example, X-ray radiation.

After the detection, the signals from the detector 190 are commonly weak and susceptible to noise or other external interferences. To enhance the quality of the signals and make them suitable for further processing, the amplifier 180 is employed. The amplifier 180 applies gain to the signal by increasing the amplitude of the detected signals. In some embodiments, the amplifier 180 might also incorporate filtering mechanisms to reduce noise or unwanted frequencies, thereby further improving the signal to noise ration of the signals.

The digital pulse processor 110 is provided for analyzing and interpreting the amplified signals from the amplifier 180, extracting information about the photon events. The digital pulse processor includes one or more neural networks, the digital pulse processor 110 analyzes the signal's characteristics, such as amplitude, rise time, duration, and frequency. Based on this analysis, the digital pulse processor 110 provides details indicative of properties and characteristics of the sample 200, such as its composition, concentration of specific elements, or presence of particular compounds.

Reference is now made to Fig. 2, which schematically illustrates a digital pulse processor 110 of a spectrometer, according to some embodiments. The digital pulse processor includes an analog-to-digital converter 112 configured to receive a signal from a detector, for example after amplification by an amplifier, and to provide the signal to a processing module 120, which processes the signal using a baseline-analyzer 122, a pile-up detector 124, a rise time analyzer 126, and an energy analyzer 128. The digital pulse processor 110 further includes an interface module 114 configured to communicate the results of the processing to a user, for example by means of display, and/or communicate the results of the processing to an external electronic device. At least one of the baseline analyzer 122, a pile-up detector 124, a rise time analyzer 128, and an energy analyzer 128 includes a neural network.

The analog-to-digital converter 112 serves as the initial point of entry for the incoming signals. In photon detection, the signals are inherently analog, representing continuous fluctuations of photon events. The converter 112 transforms these analog signals into digital signals, suitable for subsequent digital processing.

The digital pulse processor 110 includes a processing module 120. This processing module integrates multiple specialized sub-modules, each tailored for specific tasks as follows.

The baseline-analyzer 122 is responsible for monitoring the signal to determine its baseline or reference level. The pile-up detector 124 identifies instances where multiple photon signals overlap, which is a common scenario in high photon flux conditions. Properly identifying and handling such pile-ups is essential for accurate photon event interpretation. The rise time analyzer 126 analyses the temporal dynamics of the signal, assessing how quickly a photon event rises to its peak. Different photon interactions can exhibit varied rise times, and understanding this aspect provides insights into the nature of the photon event. The energy analyzer 128 maps the signal's characteristics to specific energy levels. At least one of these sub-modules 122, 124, 126, 128 includes a neural network.

Optionally, the signal is segmented using a segmentation module 132 after being converted by the digital to analog converter 112.

As illustrated in Fig. 2, after the analog to digital conversion by the analog-to-digital converter 112, the digital signal may optionally be segmented by the segmentation module 132. The purpose of the segmentation is to dissect the continuous stream of digital data into different sections each comprising an interval within the signal.

Photon detection often results in continuous signals that include many photon events, each with its unique characteristics and temporal dynamics. Processing the entire signal continuously can be computationally intensive. The segmentation module 132 breaks down the continuous signal into shorter and more manageable portions, allowing for a more detailed and nuanced analysis for each of the segments.

According to some embodiments, the segmentation is Time-Based Segmentation based on fixed time intervals. Each segment would then encapsulate all photon events occurring within that specific duration.

According to some embodiments, the segmentation is Event-Driven Segmentation based on detected markers or thresholds on the signal waveform, such as detected optional events, for example due to a gradient or a significant change in the signal. The segmentation module 132 can use these markers, representing significant events or signal inflections, to define segment boundaries.

According to some embodiments, the segmentation is Adaptive Segmentation in which the segment lengths are adapted dynamically. During periods of intense photon activity, shorter segments are used, ensuring rapid events are captured with less overlap. On the other hand, during less active intervals of the signal, longer segments are preferred for efficiency.

According to some embodiments, the duration of the segments is provided to the processing module, such that the processing is performed based on the duration of the segments. According to some embodiments, the segmentation module 132 includes one or more neural networks configured to provide segmentation strategies based on the characteristics of the incoming photon signals, such as the noise level, gradients, or the like.

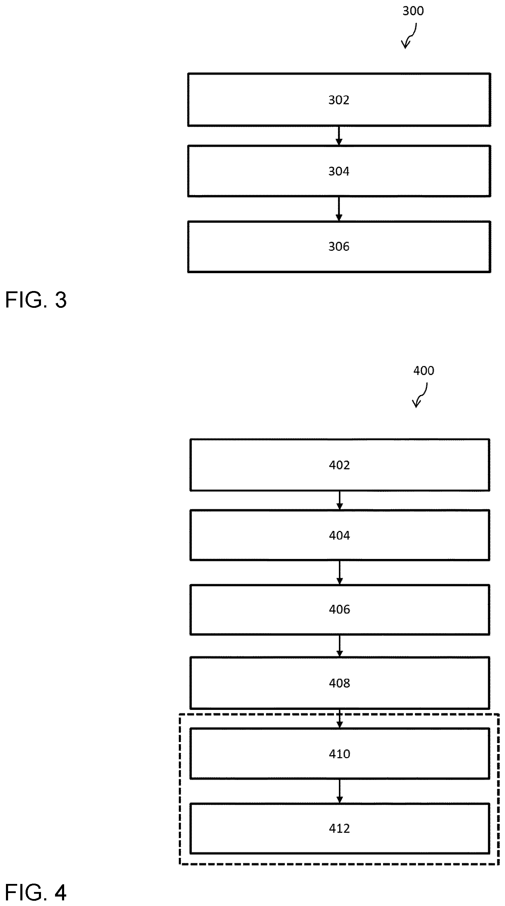

Reference is now made to Fig. 3, which schematically illustrates a high-level method 300 of a digital pulse processor for a spectrometer, according to some embodiments. The method 300 includes obtaining a signal from a detector 302, analyzing/processing the signal using at least one neural network 304, and providing the results of the processing to a user or an external electronic device 306.

According to some embodiments, analyzing/processing the signal using at least one neural network 304 includes utilizing a neural network configured and trained for extracting information indicative of properties of detected photons. This information includes one or more of the energy of a photon, time of arrival, the signal rise time during its detection, and a pile-up condition conditions where multiple photons are detected simultaneously.

According to some embodiments, analyzing/processing the signal using at least one neural network 304 includes utilizing a neural network configured and trained for segmenting the signal into a plurality of segments or sections.

According to some embodiments, analyzing/processing the signal using at least one neural network 304 includes utilizing a neural network configured and trained for obtaining sections of a signal as an input, and extracting information pertaining to a photon detection event within each section.

According to some embodiments, analyzing/processing the signal using at least one neural network 304 includes utilizing a neural network configured and trained for identifying and discarding sections of the signal in which there is indication for an absence of a photon detection event.

Reference is now made to Fig. 4, which schematically illustrates a method 400 of a digital pulse processor for a spectrometer, according to some embodiments. The method 400 includes obtaining a signal from a detector 402, amplifying the signal and converting the signal from analog to digital and optionally performing filtration on the analog signal 404, performing preliminary segmentation 406 based on a predefined rule or condition, then performing a preliminary analysis on the preliminary segments 408, re-segmenting the signal to modified segments based on the preliminary analysis 410, and processing the modified segments 412. According to some embodiments, at least one of the preliminary analysis 408, modified segmentation 410, and processing of the modified segments 412 is performed using a neural network.

The method 400 begins with the acquisition of a signal from a detector 402 which is a representation of the photon radiation interactions with the detector, then the signal is amplified to increase its amplitude, and the signal is converted from its analog form to a digital form, making it compatible for subsequent digital processing 404. According to some embodiments, before or after the amplification the signal is subjected to a filtration process in which noise or other interferences are reduced by filtering certain frequency ranges or patterns. Then, preliminary segmentation of the digital signal takes place 406, in which the signal is segmented using time-based, event-driven, or adaptive segmentation. After the segmentation, the segments are analyzed 408 for detecting characteristics of each segment, discerning patterns, anomalies, or specific features of interest.

Optionally, based on the analysis in step 408, the signal is re-segmented, such that each event in which there is no pile-up condition and wherein the signal quality is above a certain threshold is included in one segment called a modified segment. Each modified segment includes a predetermined number of samples captured before the event and a predetermined number of samples captured after the event. The modified segments are then further processed 412, extracting information about the photon events they include.

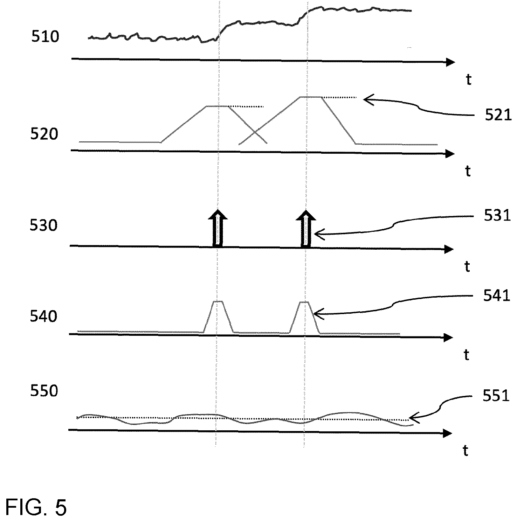

Reference is now made to Fig. 5, which schematically illustrates an exemplary analysis graphs of a signal from a detector, according to some embodiments. In the exemplary analysis, the input signal 50 is digitized and an energy filtration is applied 520 and Energy and pedestal measurement 521 is performed, then the event timing/trigger is detected for suspected photon receptions 530, a pile-up condition analysis is performed 540 to identify whether the event includes a pile-up of multiple photon interactions, and a baseline 550 and/or pedestal measurement is performed.

The analysis sequence begins with the providing input signal 510. This signal, originating from the detector. The input signal 510 includes peaks, troughs, and fluctuations, each representing different photon interactions, events, and characteristics.

The input signal 510 undergoes an energy filtration process. This filtration serves to isolate photon events of interest based on their energy levels 520, potentially eliminating noise, background radiation, or other unwanted signals.

After the energy filtration, event timing and trigger detection is performed 530 for Event detection and time-stamp 531. Here, the system identifies triggers or intervals in the digitized signal where suspected photon receptions occur. These triggers are defined by sudden spikes, sharp inflections, or similar characteristic features in the waveform. Optionally, the signal is then segmented based on the detected events, and pile-up analysis 540 is performed for pile-up detection 541, determining whether the detected event is a single photon interaction or a convergence of multiple interactions.

Lastly, a baseline analysis 550 is performed for pedestal measurement 551 is performed. The baseline represents the signal's inherent level or reference point at an idle level without any photon interactions. Establishing this baseline provides a reference against which photon events can be compared and analyzed.

Unless specifically stated otherwise, as apparent from the following discussions, it is appreciated that throughout the specification discussions utilizing terms such as "processing", "computing", "calculating", "determining", "estimating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters, and the like.

Embodiments of the present disclosure may include apparatuses for performing the operations herein. This apparatus may be specially constructed for the desired purposes, or it may comprise a general-purpose computer selectively activated or reconfigured by a computer program stored in the computer. Such a computer program may be stored in a computer-readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read-only memories (EEPROMs), magnetic or optical cards, or any other type of media suitable for storing electronic instructions, and capable of being coupled to a computer system.

The disclosure may be described in the general context of computer-executable instructions, such as program modules, being executed by a computer. Generally, program modules include routines, programs, objects, components, data structures, and so forth, which perform particular tasks or implement particular abstract data types. The disclosure may also be practiced in distributed computing environments where tasks are performed by remote processing devices that are linked through a communications network. In a distributed computing environment, program modules may be located in both local and remote computer storage media including memory storage devices.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, or components, but do not preclude or rule out the presence or addition of one or more other features, integers, steps, operations, elements, components, or groups thereof.

While a number of exemplary aspects and embodiments have been discussed above, those of skill in the art will recognize certain modifications, additions, and sub-combinations thereof. It is therefore intended that the following appended claims and claims hereafter introduced be interpreted to include all such modifications, additions, and sub-combinations as are within their scope.

## Claims

1. A method for a digital pulse processor of a spectrometer, the method comprising the steps of:
obtaining a signal from a radiation detector configured to detect one or more photons,
processing the signal using at least two neural networks, and
providing information indicative of properties of detected one or more photons based on the processing,
**characterized in that** the at least two neural networks comprise a discrepancy detection neural network, and at least one other neural network different from the discrepancy detection neural network, wherein the processing of the signal comprises:
providing at least one section of the signal to the discrepancy detection neural network,
obtaining, from the discrepancy detection neural network and for each section of the at least one section, information on a photon detection event in the section, and
processing each section for which the information on a photon detection event indicates that a photon detection event did occur via the at least one other neural network in order to obtain the information indicative of properties of detected one or more photons.

2. The method of claim 1, further comprising the step of:
converting the obtained signal from the radiation detector from an analog signal to a digital signal prior to the processing of the signal.

3. The method of claims 1 or 2, wherein the information indicative of properties of detected one or more photons comprises one or more of: an energy of a photon, a time of arrival of a photon, a signal rise time of the detection of the photon, and a pile-up condition.

4. The method of claim 1, wherein a modified section of the signal is determined for each photon detection event, the modified section including a predetermined number of samples of the signal that occurred before the event and a predetermined number of samples of the signal that occurred after the event.

5. The method of claim 1, wherein the processing of the at least one section comprises:
discarding a section of the at least one section for which the information on a photon detection event indicates that a photon detection event did not occur.

6. The method of any of claims 1 or 5, wherein the at least one other neural network is configured to provide pile-up information on a photon detection event in the section, preferably the modified section, that identifies whether the section, preferably the modified section, comprises a single photon detection event or a pile-up photon detection event in which a plurality of photons is detected.

7. The method of any of claims 1, 5, or 6, wherein the at least one other neural network is configured to identify a signal rise time within a section of the at least one section for which the information on a photon detection event indicates that a photon detection event did occur, preferably the modified section.

8. The method of claim 7, wherein the processing of the signal further comprises:
discarding sections for which a signal rise time exceeds a predefined threshold; or
determining an energy correction for a photon detection event based on the signal rise time.

9. The method of any of the proceeding claims, wherein the at least one neural network comprises an energy detection neural network and wherein the processing of the signal comprises:
providing at least one section, preferably the modified section, of the signal to the energy detection neural network,
obtaining, from the energy detection neural network and for a section of the at least one section, preferably the modified section, information on an energy of the detected one or more photons within the section, preferably the modified section.

10. The method of claim 9, wherein the processing of the signal comprises:
providing each section, preferably modified section, for which the information on a photon detection event indicates that a photon detection event did occur to the energy detection neural network,
obtaining, from the energy detection neural network and for each section, preferably modified section, for which the information on a photon detection event indicates that a photon detection event did occur, the information on an energy of the detected one or more photons in each photon detection event,
providing each section, preferably modified section, for which the information on a photon detection event indicates that a photon detection event did occur to the at least one other neural network,
obtaining, from the at least one other neural network and for each section, preferably modified section, for which the information on a photon detection event indicates that a photon detection event did occur, pile-up information and/or a rise-time for the photon detection event, and
modifying the information on an energy of the detected one or more photon in each photon detection event based on the pile-up information and/or the rise time for the photon detection event.

11. The method of any of the preceding claims, wherein a neural network from the at least two neural network is trained using at least one of:
a training signal obtained from a real photo-detector system configured to have a low-count rate of photon radiation such that detected photon events are single-photon events,
a training signal obtained from a real photo-detector system configured to have a high-count rate of photon radiation such that pile-up photon events are identified,
a simulated training signal wherein different photon events have different rise-times, and
a training signal combined from a simulated training signal and a training signal obtained from a real photo-detector system.

12. A digital pulse processor (110) for a spectrometer (100), wherein the digital pulse processor comprises a computer-readable storage medium storing instructions, such that the digital pulse processor is configured to execute the stored instructions for performing operations corresponding to the methods of any of the preceding claims.

13. A spectrometer (100), comprising:
a radiator, configured to emit photonic radiation across a specified wavelength range, preferably wherein the radiator is an X-ray radiator comprising an X-ray tube, or a radioactive X-ray source,
a detector (190), configured to detect one or more photons and generate a signal corresponding to detected one or more photons, and
a digital pulse processor (110) of claim 12.

## Patentansprüche

1. Verfahren für einen digitalen Impulsprozessor eines Spektrometers, wobei das Verfahren die folgenden Schritte umfasst:
Erhalten eines Signals von einem Strahlungsdetektor, der zum Erfassen eines oder mehrerer Photonen konfiguriert ist, Verarbeiten des Signals unter Verwendung von mindestens zwei neuronalen Netzen und
Bereitstellen von Informationen, die Eigenschaften eines oder mehrerer erfasster Photonen auf der Grundlage der Verarbeitung angeben,
**dadurch gekennzeichnet, dass** die mindestens zwei neuronalen Netze ein neuronales Netz zur Diskrepanzerkennung und mindestens ein weiteres neuronales Netz, das sich von dem neuronalen Netz zur Diskrepanzerkennung unterscheidet, umfassen, wobei das Verarbeiten des Signals Folgendes umfasst:
Bereitstellen mindestens eines Abschnitts des Signals an das neuronale Netz zur Diskrepanzerkennung, Erhalten von Informationen über ein Photonenerfassungsereignis in dem Abschnitt von dem neuronalen Netz zur Diskrepanzerkennung für jeden Abschnitt des mindestens einen Abschnitts, und
Verarbeiten jedes Abschnitts, für den die Informationen über ein Photonenerfassungsereignis angeben, dass ein Photonenerfassungsereignis tatsächlich stattgefunden hat, über das mindestens eine weitere neuronale Netz, um die Informationen zu erhalten, die Eigenschaften eines oder mehrerer erfasster Photonen angeben.

2. Verfahren nach Anspruch 1, umfassend ferner den folgenden Schritt:
Umwandeln des vom Strahlungsdetektor erhaltenen Signals von einem analogen Signal in ein digitales Signal vor dem Verarbeiten des Signals.

3. Verfahren nach Anspruch 1 oder 2, wobei die Informationen, die Eigenschaften eines oder mehrerer erfasster Photonen angeben,
eine oder mehrere der folgenden Informationen umfassen: eine Energie eines Photons, eine Ankunftszeit eines Photons, eine Signalanstiegszeit der Erfassung des Photons und einen Pile-up-Zustand.

4. Verfahren nach Anspruch 1, wobei für jedes Photonenerfassungsereignis ein modifizierter Abschnitt des Signals bestimmt wird, wobei der modifizierte Abschnitt eine vorbestimmte Anzahl von Proben des Signals, die vor dem Ereignis auftraten, und eine vorbestimmte Anzahl von Proben des Signals, die nach dem Ereignis auftraten, umfasst.

5. Verfahren nach Anspruch 1, wobei das Verarbeiten des mindestens einen Abschnitts Folgendes umfasst:
Verwerfen eines Abschnitts des mindestens einen Abschnitts, für den die Informationen über ein Photonenerfassungsereignis angeben, dass kein Photonenerfassungsereignis stattgefunden hat.

6. Verfahren nach einem der Ansprüche 1 oder 5, wobei das mindestens eine weitere neuronale Netz dazu konfiguriert ist, Pile-up-Informationen über ein Photonenerfassungsereignis in dem Abschnitt, vorzugsweise dem modifizierten Abschnitt, bereitzustellen, die angeben, ob der Abschnitt, vorzugsweise der modifizierte Abschnitt, ein einzelnes Photonenerfassungsereignis oder ein Pile-up-Photonenerfassungsereignis, bei dem mehrere Photonen erfasst werden, umfasst.

7. Verfahren nach einem der Ansprüche 1, 5 oder 6, wobei das mindestens eine weitere neuronale Netz dazu konfiguriert ist, eine Signalanstiegszeit innerhalb eines Abschnitts des mindestens einen Abschnitts zu identifizieren, für den die Informationen über ein Photonenerfassungsereignis angeben, dass ein Photonenerfassungsereignis tatsächlich stattgefunden hat, vorzugsweise des modifizierten Abschnitts.

8. Verfahren nach Anspruch 7, wobei das Verarbeiten des Signals ferner Folgendes umfasst:
Verwerfen von Abschnitten, für die eine Signalanstiegszeit einen vordefinierten Schwellenwert überschreitet; oder
Bestimmen einer Energiekorrektur für ein Photonenerfassungsereignis auf der Grundlage der Signalanstiegszeit.

9. Verfahren nach einem der vorstehenden Ansprüche, wobei das mindestens eine neuronale Netz ein neuronales Netz zur Energieerkennung umfasst, wobei das Verarbeiten des Signals Folgendes umfasst:
Bereitstellen mindestens eines Abschnitts, vorzugsweise des modifizierten Abschnitts, des Signals an das neuronale Netz zur Energieerkennung,
Erhalten von Informationen über eine Energie des einen oder der mehreren erfassten Photonen innerhalb des Abschnitts, vorzugsweise des modifizierten Abschnitts, von dem neuronalen Netz zur Energieerkennung für einen Abschnitt des mindestens einen Abschnitts, vorzugsweise den modifizierten Abschnitt.

10. Verfahren nach Anspruch 9, wobei das Verarbeiten des Signals Folgendes umfasst:
Bereitstellen jedes Abschnitts, vorzugsweise des modifizierten Abschnitts, für den die Informationen über ein Photonenerfassungsereignis angeben, dass ein Photonenerfassungsereignis tatsächlich stattgefunden hat, an das neuronale Netz zur Energieerkennung,
Erhalten der Informationen über eine Energie des einen oder der mehreren in jedem Photonenerfassungsereignis erfassten Photonen von dem neuronalen Netz zur Energieerkennung für jeden Abschnitt, vorzugsweise den modifizierten Abschnitt, für den die Informationen über ein Photonenerfassungsereignis angeben, dass ein Photonenerfassungsereignis tatsächlich stattgefunden hat,
Bereitstellen jedes Abschnitts, vorzugsweise des modifizierten Abschnitts, für den die Informationen über ein Photonenerfassungsereignis angeben, dass ein Photonenerfassungsereignis tatsächlich stattgefunden hat, an das mindestens eine weitere neuronale Netz,
Erhalten von Pile-up-Informationen und/oder einer Anstiegszeit für das Photonenerfassungsereignis von dem mindestens einen weiteren neuronalen Netz für jeden Abschnitt, vorzugsweise den modifizierten Abschnitt, für den die Informationen über ein Photonenerfassungsereignis angeben, dass ein Photonenerfassungsereignis tatsächlich stattgefunden hat, und
Modifizieren der Informationen über eine Energie des einen oder der mehreren in jedem Photonenerfassungsereignis erfassten Photonen auf der Grundlage der Pile-up-Informationen und/oder der Anstiegszeit für das Photonenerfassungsereignis.

11. Verfahren nach einem der vorstehenden Ansprüche, wobei ein neuronales Netz von den mindestens zwei neuronalen Netzen unter Verwendung mindestens eines des Folgenden trainiert wird:
eines Trainingssignals, das von einem realen Photodetektorsystem erhalten wird, das so konfiguriert ist, dass es eine niedrige Zählrate von Photonenstrahlung aufweist, so dass erkannte Photonenereignisse Einzelphotonenereignisse sind,
eines Trainingssignals, das von einem realen Photodetektorsystem erhalten wird, das so konfiguriert ist, dass es eine hohe Zählrate von Photonenstrahlung aufweist, so dass Pile-up-Photonenereignisse identifiziert werden,
eines simulierten Trainingssignals, bei dem verschiedene Photonenereignisse unterschiedliche Anstiegszeiten aufweisen, und eines Trainingssignals, das aus einem simulierten Trainingssignal und einem von einem realen Photodetektorsystem erhaltenen Trainingssignal kombiniert ist.

12. Digitaler Impulsprozessor (110) für ein Spektrometer (100), wobei der digitale Impulsprozessor ein computerlesbares Speichermedium umfasst, auf dem Befehle gespeichert sind, so dass der digitale Impulsprozessor dazu konfiguriert ist, die gespeicherten Befehle auszuführen, um Vorgänge durchzuführen, die den Verfahren nach einem der vorstehenden Ansprüche entsprechen.

13. Spektrometer (100), umfassend:
einen Strahler, der dazu konfiguriert ist, Photonenstrahlung über einen vorgegebenen Wellenlängenbereich zu emittieren, vorzugsweise wobei der Strahler ein Röntgenstrahler ist, der eine Röntgenröhre oder eine radioaktive Röntgenquelle umfasst,
einen Detektor (190), der dazu konfiguriert ist, ein oder mehrere Photonen zu erfassen und ein Signal zu erzeugen, das dem einen oder den mehreren erfassten Photonen entspricht, und
einen digitalen Impulsprozessor (110) nach Anspruch 12.

## Revendications

1. Procédé pour un processeur numérique d'impulsions d'un spectromètre, le procédé comprenant les étapes suivantes :
obtenir un signal à partir d'un détecteur de rayonnement configuré pour détecter un ou plusieurs photons, traiter le signal à l'aide d'au moins deux réseaux neuronaux, et
fournir une information indicative de propriétés d'un ou plusieurs photons détectés sur la base du traitement,
**caractérisé en ce que** l'au moins deux réseaux neuronaux comprennent un réseau neuronal de détection divergente, et au moins un autre réseau neuronal différent du réseau neuronal de détection divergente, dans lequel le traitement du signal comprend :
fournir au moins une section du signal au réseau neuronal de détection divergente, obtenir, à partir du réseau neuronal de détection divergente et pour chaque section de l'au moins une section, une information sur un événement de détection de photons dans la section, et
traiter chaque section pour laquelle l'information sur un événement de détection de photons indique qu'un événement de détection de photons s'est produit à travers l'au moins un autre réseau neuronal afin d'obtenir l'information indicative de propriétés d'un ou plusieurs photons détectés.

2. Procédé selon la revendication 1, comprenant les étapes suivantes :
convertir le signal obtenu à partir du détecteur de rayonnement d'un signal analogique en signal numérique avant le traitement du signal.

3. Procédé selon les revendications 1 ou 2, dans lequel l'information indicative de propriétés d'un ou plusieurs photons détectés comprend un ou plusieurs parmi : une énergie d'un photon, un temps d'arrivée d'un photon, un temps de montée de signal lors de la détection du photon et une condition d'empilement.

4. Procédé selon la revendication 1, dans lequel une section modifiée du signal est déterminée pour chaque événement de détection de photons, la section modifiée comprenant un nombre prédéterminé d'échantillons du signal qui s'est produit avant l'événement et un nombre prédéterminé d'échantillons du signal qui s'est produit après l'événement.

5. Procédé selon la revendication 1, dans lequel le traitement d'au moins une section comprend :
éliminer une section de l'au moins une section pour laquelle l'information sur un événement de détection de photons indiquent qu'aucun événement de détection de photons ne s'est produit.

6. Procédé selon l'une quelconque des revendications 1 ou 5, dans lequel l'au moins un autre réseau neuronal est configuré pour fournir une information d'empilement sur un événement de détection de photons dans la section, de préférence la section modifiée, qui identifie si la section, de préférence la section modifiée, comprend un événement de détection de seul photon ou un événement de détection de photons d'empilement dans lequel une pluralité de photons sont détectés.

7. Procédé selon l'une quelconque des revendications 1, 5 ou 6, dans lequel l'au moins un autre réseau neuronal est configuré pour identifier un temps de montée de signal dans une section de l'au moins une section pour laquelle l'information sur un événement de détection de photons indique qu'un événement de détection de photons s'est produit, de préférence la section modifiée.

8. Procédé selon la revendication 7, dans lequel, le traitement du signal comprend en outre
éliminer des sections pour lesquelles le temps de montée de signal dépasse un seuil prédéfini ; ou
déterminer une correction d'énergie pour un événement de détection de photons sur la base du temps de montée de signal.

9. Procédé selon l'une quelconque des revendications précédentes, dans lequel l'au moins un réseau neuronal comprend un réseau neuronal de détection d'énergie et dans lequel le traitement du signal comprend :
fournir au moins une section, de préférence la section modifiée, du signal au réseau neuronal de détection d'énergie,
obtenir, à partir du réseau neuronal de détection d'énergie et pour une section de l'au moins une section, de préférence la section modifiée, une information sur une énergie de l'un ou plusieurs photons détectés dans la section, de préférence la section modifiée.

10. Procédé selon la revendication 9, dans lequel, le traitement du signal comprend :
fournir chaque section, de préférence section modifiée, pour laquelle l'information sur un événement de détection de photons indiquent qu'un événement de détection de photons s'est produit, au réseau neuronal de détection d'énergie,
obtenir, à partir du réseau neuronal de détection d'énergie et pour chaque section, de préférence section modifiée, pour laquelle l'information sur un événement de détection de photons indique qu'un événement de détection de photons s'est produit, l'information sur une énergie de l'un ou plusieurs photons détectés dans chaque événement de détection de photons,
fournir chaque section, de préférence section modifiée, pour laquelle l'information sur un événement de détection de photons indiquent qu'un événement de détection de photons s'est produit, à l'au moins un autre réseau neuronal,
obtenir, à partir de l'au moins un autre réseau neuronal et pour chaque section, de préférence section modifiée, pour laquelle l'information sur un événement de détection de photons indique qu'un événement de détection de photons s'est produit, une information d'empilement et/ou un temps de montée pour l'événement de détection de photons, et
modifier l'information sur une énergie de l'un ou plusieurs photons détectés dans chaque événement de détection de photons sur la base de l'information d'empilement et/ou du temps de montée pour l'événement de détection de photons.

11. Procédé selon l'une quelconque des revendications précédentes, dans lequel un réseau neuronal de l'au moins deux réseaux neuronaux est entraîné à l'aide d'au moins l'un parmi :
un signal d'entraînement obtenu à partir d'un système de photodétecteur réel configuré pour avoir un bas taux de comptage de rayonnement photonique de sorte que les événements de photons détectés soient des événements de seul photon,
un signal d'entraînement obtenu à partir d'un système de photodétecteur réel configuré pour avoir un haut taux de comptage de rayonnement photonique de sorte que des événements de photons d'empilement soient identifiés,
un signal d'entraînement simulé dans lequel événements photoniques différents présentent des temps de montée différents, et un signal d'entraînement combiné d'un signal d'entraînement simulé et d'un signal d'entraînement obtenu à partir d'un système de photodétecteur réel.

12. Processeur numérique d'impulsions (110) pour un spectromètre (100), dans lequel le processeur numérique d'impulsions comprend un support de stockage lisible par ordinateur stockant des instructions, de sorte que le processeur numérique d'impulsions est configuré pour exécuter les instructions stockées pour effectuer des opérations correspondant aux procédés selon l'une quelconque des revendications précédentes.

13. Spectromètre (100), comprenant :
un radiateur, configuré pour émettre un rayonnement photonique sur une plage de longueurs d'onde spécifiée, de préférence dans lequel le radiateur est un radiateur à rayons X comprenant un tube à rayons X, ou une source radioactive de rayons X,
un détecteur (190), configuré pour détecter un ou plusieurs photons et générer un signal correspondant à un ou plusieurs photons détectés, et
un processeur numérique d'impulsions (110) selon la revendication 12.
